# FASCICULE DE BREVET EUROPEEN

(11) **EP 3 435 769 B1**
(45) Date de publication et mention de la délivrance du brevet: **19.05.2021**
(21) Numéro de dépôt: 17719654.0
(22) Date de dépôt: 30.03.2017
(51) Int. Cl.: A21D 13/00, A21D 6/00

(54) **PROCEDE DE PERSONNALISATION DU GOÛT DE PAINS OU DE VIENNOISERIES**
VERFAHREN ZUR PERSONIFIZIERUNG DES GESCHMACKS VON BROT- UND TEIGPRODUKTEN
PROCESS FOR THE TAYLORING OF THE TASTE OF BREAD OR PASTRY PRODUCTS

(30) Priorité: 31.03.2016 FR 1652812
(43) Date de publication de la demande: 06.02.2019
(73) Titulaire: Lesaffre et Compagnie, 75001 Paris (FR)
(72) Inventeur: BRYCKAERT, Emilie, 59700 MARCQ-EN-BAROEUL (FR); DELCHAMBRE, Florence, 59890 QUESNOY-SUR-DEULE (FR); DUPUY-CORNUAILLE, Camille, 59700 MARCQ-EN-BAROEUL (FR); MEILLIER, Stéphane, 59223 RONCQ (FR)
(74) Mandataire: Plasseraud IP
(86) Numéro de dépôt international: PCT/FR2017/050731
(87) Numéro de publication internationale: WO 2017/168098

(56) Documents cités:
- EP-A1- 2 266 407
- EP-B1- 0 966 200
- FR-A1- 2 796 811
- FR-A1- 2 866 205
- US-A1- 2007 052 098
- US-A1- 2007 172 545

## Description

La présente invention se rapporte à un procédé de personnalisation du goût de pains et/ou de viennoiseries.

Le consommateur a des exigences de plus en plus spécifiques en matière de goût du pain et de la viennoiserie. Les boulangers doivent donc être en mesure de proposer à leur clientèle une large variété de goûts ou saveurs pour leurs pains et viennoiseries. Cette exigence en matière de goût s'accompagne d'une attente plus forte encore en matière de nature des produits utilisés. Ce sont principalement des produits naturels qui, de nos jours, suscitent l'engouement des consommateurs.

Il existe actuellement, des solutions de personnalisation du goût du pain/viennoiserie qui consistent principalement à ajouter directement au pétrin, lors de l'ajout des différents ingrédients, avant pétrissage, des produits aromatiques divers, par exemple des levains, malts, extraits de levure, arômes naturels ou de synthèse, fruits secs, graines etc.... Ces ingrédients ajoutés dans la pâte avant pétrissage permettent d'obtenir des profils aromatiques variés et bien perceptibles du consommateur. Néanmoins, pour chaque goût recherché, une production spécifique doit être mise en place.

Une autre solution technique concerne l'incorporation de produits aromatiques en fin de pétrissage. Cette méthode permet, à partir d'une recette de pâte unique et après division de celle-ci en plus petits pétrins, de la personnaliser en différentes recettes. Un gain de temps est attribué à cette technique. Néanmoins, le sur-pétrissage nécessité par le mélange du produit aromatique à la pâte, peut générer des problèmes de rhéologie tels que du collant.

De plus, ces deux méthodes nécessitent la plupart du temps des dosages de produits aromatiques purs importants, allant par exemple jusqu'à 15% (par rapport au poids de la farine), notamment pour les levains. De tels dosages sont nécessaires afin de typer significativement la mie des produits de boulangerie/viennoiserie.

Enfin, et plus particulièrement en viennoiserie, une large gamme d'aromatisation des produits concernent des arômes de synthèse, par exemple la vanille, qui nécessitent un étiquetage particulier et qui rencontrent de moins en moins d'engouement auprès des consommateurs à la recherche de produits naturels. Les arômes naturels sont donc une alternative à cet écueil mais leur prix rend leur utilisation problématique
L'ajout d'ingrédients comprenant de l'extrait de levure dans la pâte afin d'apporter de l'arôme est décrit dans US 2007/0172545 A1. L'apport d'arôme d'ail sous forme liquide ou pulvérulente en surface d'un pâton est décrit dans US 2007/0042098 A1.

Il existe donc un réel besoin en un procédé de personnalisation du goût des pains et/ou viennoiseries, dont le coût reste économiquement compétitif, qui maintienne toutes les qualités du produit et permette une large gamme de saveurs et intensité tout en étant simple à mettre en œuvre.

Les présents inventeurs ont trouvé qu'il était possible de personnaliser le goût de pains et/ou viennoiseries en modifiant le goût de la croûte. En effet, le goût de la croûte impacte significativement la perception globale, c'est-à-dire à la fois de la mie et de la croûte du pain/viennoiserie et son appréciation par le consommateur.

Ainsi, la présente invention a pour objet un procédé de personnalisation du goût de pains ou de viennoiseries dans lequel on applique à la surface du pâton mis en forme ou sur la croûte précuite de pains /viennoiserie, dans les deux cas avant cuisson finale, une composition aromatisante comprenant un ingrédient apportant l'arôme, ce dernier étant défini plus loin.

La composition aromatisante peut être une composition liquide ou une composition solide sous forme de poudre.

Selon un mode de réalisation du procédé de l'invention, l'ingrédient apportant l'arôme est placé dans un milieu liquide, qui peut être de l'eau ou une préparation pour dorure.

Selon un autre mode de réalisation du procédé de l'invention, l'ingrédient apportant l'arôme est mélangé, avant son application, à un support choisi dans le groupe comprenant de la farine, de la semoule, des graines telles que des graines de sésame, des graines de pavot, des céréales telles que des flocons d'avoine, et leurs mélanges.

La composition aromatisante sous forme liquide est préparée par mélange d'au moins un ingrédient apportant l'arôme dans l'eau, à raison de 5 à 50% de produit apportant l'arôme dans 95 à 50% d'eau, ledit ingrédient apportant l'arôme étant choisi parmi le malt, l'extrait de malt, les dérivés de levure, les levains ou leur mélange.

Dans le cas de la dorure, entre 1 et 15% des liquides cités ci-dessus (à savoir mélange de l'arôme dans l'eau) sont incorporés dans 99 à 85% de dorure.

Dans la présente demande, les pourcentages sont des pourcentages massiques.

La composition aromatisante sous forme pulvérulente est préparée par mélange d'au moins un ingrédient apportant l'arôme avec un support choisi dans le groupe comprenant de la farine, de la semoule, des graines telles que des graines de sésame, des graines de pavot, des céréales telles que des flocons d'avoine, et leurs mélanges.

Une telle composition aromatisante pulvérulente comprend de 1 à 30% d'ingrédient apportant l'arôme, ledit ingrédient étant choisi parmi le malt, l'extrait de malt, les dérivés de levure, les levains et leurs mélanges, et de 70 à 99% de support.

La présente invention a ainsi plus particulièrement pour objet un procédé de personnalisation du goût de pain ou de viennoiserie dans lequel, on applique à la surface du pâton mis en forme ou sur la croûte du pain ou de la viennoiserie, avant cuisson finale :
- une composition aromatisante liquide dans laquelle la concentration en ingrédient apportant l'arôme est de 5 à 50% en poids de la composition liquide, ou
- une composition aromatisante pulvérulente comprenant 1 à 30% d'ingrédient apportant l'arôme et 70 à 99% d'un support choisi dans le groupe comprenant de la farine, de la semoule, des graines telles que des graines de sésame, des graines de pavot, des céréales telles que des flocons d'avoine, et leurs mélanges,
ledit ingrédient apportant l'arôme étant du malt, un extrait de malt, un dérivé de levure, un levain sec ou liquide ou tout mélange de ces ingrédients.

Selon un mode de réalisation du procédé de l'invention, dans la composition aromatique pulvérulente, l'ingrédient apportant l'arôme est présent en une teneur allant de 1 à 15% et le support est présent en une quantité allant de 85 à 99%.

Selon un autre mode de réalisation du procédé de l'invention, dans la composition aromatique pulvérulente, l'ingrédient apportant l'arôme est présent en une teneur allant de 15 à 30% et le support est présent en une quantité allant de 70 à 85%.

La composition aromatisante mise en œuvre dans le procédé selon l'invention est une composition comprenant en tant qu'ingrédient apportant l'arôme ou le goût : du malt, un extrait de malt, un dérivé de levure c'est-à-dire un extrait de levure ou une levure désactivée, un levain sec ou liquide ou tout mélange de ces ingrédients.

Dans la présente invention on entend par « pain » tout produit obtenu par la cuisson d'une pâte obtenue par le pétrissage d'une composition comprenant au moins de la farine, de l'eau et du sel et levée à l'aide d'un agent levant en particulier de la levure.

Par « malt » on entend, toute céréale germée, notamment l'orge, le froment, le blé, le seigle, le sorgho, qui est cuite pour qu'elle dégage tous ses arômes.

Par « extrait de malt » on entend une bouillie formée de farine maltée mélangée avec de l'eau et ayant subi un processus d'hydrolyse enzymatique.

Par « extrait de levure » on entend la partie soluble de la levure qui est obtenue après autolyse et/ou plasmolyse de la levure et séparation de la parie soluble de la partie insoluble. Les extraits de levure mis en œuvre dans le procédé de l'invention sont des extraits de Saccharomyces *cerevisiae,* Saccharomyces *chevalieri,* Pichia *jadinii (Torula),* Saccharomyces *Boulardii.*

Par « levain » on entend un ferment de panification issu d'un mélange de farine et d'eau dans lequel s'exerce l'activité métabolique d'une population hétérogène de bactéries lactiques et de levures, soit par fermentation spontanée (levain dit « naturel »), soit par fermentation initiée par une culture starter, avec ou sans rafraîchi. Ce terme englobe également, des levains produits industriellement tels que le levain vivant actif ou le levain dévitalisé, ainsi que le starter levain.

Les dérivés de levures permettent d'apporter des notes crackers, fromage, bacon, bouillon et/ou grillées à la croûte. Les levains permettent d'apporter des notes acétiques, lactiques, crackers et/ou grillées à la croûte. Les malts et extraits de malts permettent d'apporter des notes café, cacao, noix, noisette, levain, miel, maltées et/ou fumées.

Selon un mode de réalisation du procédé de l'invention, l'ingrédient apportant l'arôme est placé dans un milieu liquide ou dans de la dorure, de préférence de l'eau, ou est mélangé à un support tel que défini ci-dessus.

Selon un mode de réalisation particulier, on applique sur un pâton cru mis en forme, sur la croûte d'un pain ou d'une viennoiserie précuit(e) ou sur la croûte d'un pain ou d'une viennoiserie précuit(e) surgelé(e) une composition aromatisante sous forme liquide.

Concernant la viennoiserie, la composition aromatisante peut également être apportée via la dorure, auquel cas, l'ingrédient apportant l'arôme ou la solution aqueuse le comprenant est introduit directement dans la préparation pour dorure.

L'application sur le pain/viennoiserie de la solution aromatisante liquide peut se faire par tous moyens connus et notamment par pulvérisation.

Selon un mode de réalisation avantageux, l'application se fait par pulvérisation. La pulvérisation permet de répartir de façon uniforme la composition aromatique sur toute la surface du pâton mis en forme, ou sur toute la surface de la croûte en sortie de pré-cuisson, avant cuisson. Elle permet également de minimiser la quantité de composition liquide appliquée.

Le procédé de pulvérisation permet ainsi de déposer de 4 à 40 mg de composition aromatisante liquide par cm² de surface de pâte avant ou après pré-cuisson, de préférence de 10 à 22 mg de composition aromatisante liquide par cm² de surface de pâte pulvérisée, selon l'apport aromatique recherché.

Selon un autre mode de réalisation particulier, la composition est pulvérulente et est appliquée par fleurage.

Le fleurage est réalisé sur le pâton mis en forme avant enfournement ou sur la croûte du pain ou de la viennoiserie avant enfournement.

Le procédé de fleurage permet de déposer, selon un mode de réalisation de l'invention, de 4 à 100 mg, de préférence de 17 à 48 mg, de composition aromatique sur chaque cm² de pâton ou de croûte de pain ou de viennoiserie.

Selon un mode de réalisation de l'invention, le procédé de fleurage permet de déposer de 4 à 50 mg, de préférence de 17 à 26 mg, de composition aromatique sur chaque cm² de pâton ou de croûte de pain ou de viennoiserie.

Selon un mode de réalisation de l'invention, le procédé de fleurage permet de déposer de 50 à 100 mg, de préférence de 26 à 48 mg, de composition aromatique sur chaque cm² de pâton ou de croûte de pain ou de viennoiserie.

Lorsque la composition est sous forme pulvérulente, le mélange de l'ingrédient apportant l'arôme avec le support peut être réalisé par différentes techniques.

Parmi ces techniques on peut citer :
- le simple mélange physique du support et de l'agent apportant l'arôme,
- l'enrobage-séchage intégrant une étape de pulvérisation d'une solution aqueuse comprenant l'agent apportant l'arôme autour du support, suivie d'une étape de séchage du support enrobé ainsi obtenu. Selon un mode préféré, la pulvérisation et le séchage sont réalisés simultanément par une technique d'enrobage-séchage en lit fluidisé.

De façon avantageuse selon l'invention, la quantité d'ingrédient nécessaire pour l'aromatisation par ces procédés de pulvérisation ou de fleurage est entre 2 et 10 fois moins importante que dans le cas d'une aromatisation par une incorporation de cet ingrédient au pétrin.

Le procédé selon l'invention peut s'appliquer à tout type de panification, à l'échelle artisanale ou industrielle.

L'étape de cuisson permet, via les réactions de Maillard, de générer ou renforcer spécifiquement certains arômes apportés par les solutions aromatisantes proposées. En effet, pour un même produit à pouvoir aromatique tel que le levain, les arômes du pain obtenu avec incorporation au pétrin ou pulvérisation sur la croûte sont différents.

Le procédé est utilisable aussi bien avec des procédés directs de fabrication du pain/viennoiserie ou bien avec des procédés incluant une étape de pré-cuisson.

Selon un mode de réalisation particulier, dit « procédé direct », on prépare du pain ou de la viennoiserie selon les étapes successives suivantes :
1. Pétrissage
2. Division
3. Façonnage
4. Fermentation
5. Cuisson,
la composition aromatisante étant appliquée juste avant l'étape 5 de cuisson.

Selon un autre mode de réalisation particulier, dit « procédé incluant une pré-cuisson », on prépare de pain ou de la viennoiserie selon les étapes successives suivantes :
1'. Pétrissage
2'. Division
3'. Façonnage
4'. Fermentation
5'. Pré-cuisson
6'. Cuisson,
la composition aromatisante étant appliquée ou bien juste avant l'étape 5' de pré-cuisson ou bien juste avant l'étape 6' de cuisson.

L'invention a encore pour objet un procédé de personnalisation du goût de pains ou de viennoiseries dans lequel on applique sur la croûte de pains ou de viennoiseries cuits, dans les deux cas immédiatement après cuisson finale, une composition aromatisante.

La composition aromatisante est appliquée tout de suite après cuisson finale, lorsque les pains et/ou viennoiseries sont encore bien chauds.

La composition aromatisante liquide peut par exemple être appliquée par pulvérisation sur un pain/viennoiserie cuit dès sa sortie du four, ce qui permet une évaporation rapide du liquide et la fixation de l'agent apportant l'arôme sur la croûte du produit traité.

La composition aromatisante est telle que définie ci-dessus.

Ainsi, l'invention a plus particulièrement pour objet un procédé de personnalisation du goût de pain ou de viennoiserie dans lequel, on applique sur la croûte de pains ou de viennoiseries, après cuisson finale :
- une composition aromatisante liquide dans laquelle la concentration en ingrédient apportant l'arôme est de 5 à 50% en poids de la composition liquide, ou
- une composition aromatisante pulvérulente comprenant 1 à 30% d'ingrédient apportant l'arôme et 70 à 99% d'un support choisi dans le groupe comprenant de la farine, de la semoule, des graines telles que des graines de sésame, des graines de pavot, des céréales telles que des flocons d'avoine, et leurs mélanges.

Selon un autre mode de réalisation particulier, on prépare du pain ou de la viennoiserie selon les étapes successives suivantes :
1'. Pétrissage
2'. Division
3'. Façonnage
4'. Fermentation
5'. Eventuellement, Pré-cuisson
6 ' . Cuisson,
la composition aromatisante étant appliquée juste après l'étape 6' de cuisson.

Dans les modes de réalisation décrits ci-dessus, les procédés permettent avantageusement :
- une personnalisation des profils aromatiques des produits de boulangerie/viennoiserie via la croûte ;
- un gain de temps par la réalisation d'un pétrin unique pour déclinaison sur diverses recettes ;
- une réduction de la dose d'utilisation et donc du coût d'utilisation des produits aromatiques.

En outre, les produits à pouvoir aromatique proposés sont naturels, ils sont dépourvus d'arôme de synthèse et ne nécessitent donc pas un étiquetage particulier.

L'invention va être décrite plus en détail à l'aide des exemples suivants qui sont donnés à titre purement illustratif.

### EXEMPLES

### 1. Préparation pour fleurage d'une composition aromatisante comprenant un support à base de semoule enrobé d'un agent apportant l'arôme.

L'enrobage-séchage est réalisé en lit fluidisé sur un appareil de type LAF Sherwood M501 équipé d'une buse bi-fluide et d'une pompe péristaltique Masterflex.

L'agent apportant l'arôme est un extrait de levure ou un extrait de malt.

La première étape consiste à préparer les solutions aqueuses comprenant l'agent apportant l'arôme par la mise en solution de ce dernier qu'il soit sous la forme d'une poudre ou sous la forme liquide. Le rapport agent apportant l'arôme/eau est défini de manière à ce que le taux de matière sèche de la solution soit compris entre 20 et 50 % et de préférence entre 25 et 45%.

La deuxième étape consiste à pulvériser ces solutions d'extrait de levure ou de malt sur la semoule en mouvement dans le lit d'air fluidisé, suivi d'une étape de séchage de 10 minutes à une température compris entre 40 et 50°C.

La semoule utilisée est une semoule de blé référencée « Durum Wheet, Dossche Mills 1000683 ».

Le débit de pulvérisation est de 2,5 g par minute.

On obtient ainsi une semoule enrobée avec l'extrait de levure commercialisé sous la référence « Springer® 0402/20-MG-L » avec un taux d'enrobage de 9% (Taux d'enrobage (%)g/100g de produit à enrober).

### 2. Préparation des pains et résultats

Un panel expert, constitué de 10 personnes entraînées à la dégustation et à la notation de pains sur échelle de notation continue (0 à 10) goûte et note successivement 2 groupes de 3 produits réalisés selon la recette de baguette et le diagramme suivants :

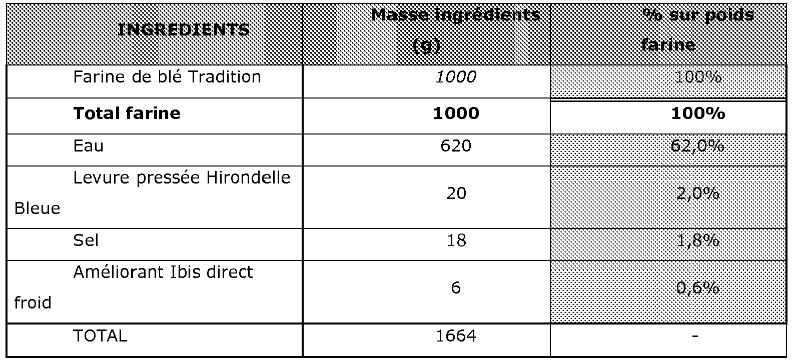

| **ETAPES** | **Détails** |
|---|---|
| Pétrissage (pétrin à spiral à 2 vitesses) | 3 min à Vitesse 1 + 5 min à Vitesse 2 |
| Pointage | 10 min |
| Division | 350g |
| Boulage | moyen |
| Détente | 10 min |
| Façonnage | Machine |
| Apprêt 28°c | 90 min |
| Cuisson four rotatif | 18 min de 230°C à 200°C |

Les deux groupes de produits suivants ont été testés :

### 1/ Groupe 1

### Baguette témoin

Baguette avec Crème de Levain, pulvérisée, dosage : environ 11 à 22 mg/cm² de liquide pulvérisé à la surface de chaque pâton.

Baguette avec Crème de Levain incorporée directement à la pâte, dosage : 10% sur poids de la farine au pétrin

### 2/ Groupe 2

### Baguette témoin

Baguette aromatisée par fleurage avec un extrait de levure commercialisé sous la référence « Springer® 0402/20-MG-L » (désigné ci-après par exl springer 0402), dosage : environ 22 mg/cm² d'un mélange poudre composé de 95% de farine + 5% de Springer® 0402/20-MG-L.

Baguette avec Springer® 0402/20-MG-L incorporé directement à la pâte, dosage : 0,8% de l'extrait de levure pur sur poids de la farine au pétrin

### 3/ Groupe 3

### Baguette témoin

Baguette aromatisée par fleurage (à raison de 48 mg/cm²) avec de la semoule enrobée obtenue selon l'exemple 1 avec l'extrait de levure commercialisé sous la référence « Springer® 0402/20-MG-L » (désigné ci-après par Semoule EXL springer 0402)

Les panélistes ont goûté les produits dans un ordre aléatoire au sein de chaque groupe, en lumière blanche, et ils ont testé pour chaque produit une bouchée de mie + croûte supérieure : au nez, puis en bouche.

Ils ont noté les attributs suivants :
Odeur : farine, fermentation, fromage, crackers, levain, malté-torréfié.

Arômes et Goût : farine, fermentation, fromage, crackers, levain, salé, acide, malté-torréfié.

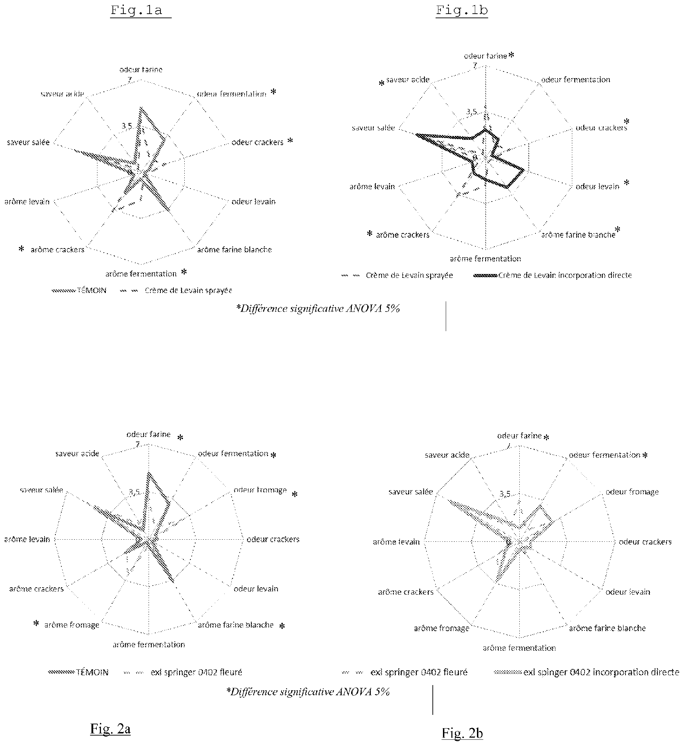

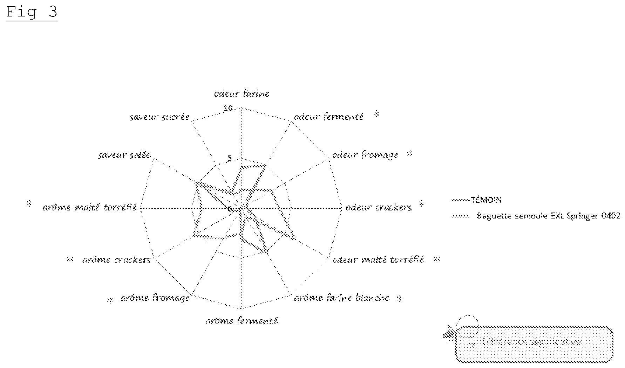

Les résultats de ces tests sont représentés sur les figures 1, 2 et 3 sur lesquelles :
- les figures 1a et 1b sont respectivement les diagrammes obtenus pour les essais du groupe 1 avec la baguette témoin et la baguette avec crème de levain pulvérisée (figure la) et avec la baguette avec crème de levain pulvérisée et la baguette avec crème de levain incorporée dans la pâte (figure 1b) ;
- les figures 2a et 2b sont respectivement les diagrammes obtenus pour les essais du groupe 2 avec la baguette témoin et la baguette avec exl springer 0402 fleuré (figure 2a) et avec la baguette avec exl springer 0402 fleuré et la baguette avec exl springer 0402 incorporé dans la pâte (figure 2b),
- la figure 3 est le diagramme obtenu pour les essais du groupe 3 avec la baguette témoin et la baguette fleurée avec la semoule exl springer 0402 fleuré telle que décrite au point 1 (1.) des exemples ci-dessus.

Les conclusions principales sont:

### Groupe 1

En comparaison au témoin et au produit avec incorporation directe au pétrin, la pulvérisation de Crème de Levain apporte une odeur et un arôme significativement plus crackers, qui couvre l'odeur fermentée et l'arôme de farine blanche.

La note levain (odeur et arôme) et la saveur acide ne sont pas perçues sur le produit pulvérisé versus incorporation directe.

### Groupe 2

La perception aromatique de la baguette avec incorporation directe de l'extrait de levure au pétrin et celle du produit fleuré sont proches en bouche.

L'odeur et l'arôme fromage sont significativement supérieurs au témoin pour les deux produits avec Springer® 0402/20-MG-L.

Ils couvrent l'arôme farine blanche perçu dans le témoin.

### Groupe 3

En comparaison au témoin, le fleurage de la baguette avec une semoule aromatisée avec l'extrait de levure Springer 0402 apporte une odeur et un arôme significativement plus crackers, malté-torréfié et fromage. Cela couvre l'odeur fermentée et l'arôme de farine blanche d'une baguette témoin sans fleurage aromatique.

## Revendications

1. Procédé de personnalisation du goût de pain ou de viennoiserie dans lequel, on applique à la surface du pâton mis en forme ou sur la croûte du pain ou de la viennoiserie, avant cuisson finale :
- une composition aromatisante liquide dans laquelle la concentration en ingrédient apportant l'arôme est de 5 à 50% en poids de la composition liquide, ou
- une composition aromatisante pulvérulente comprenant 1 à 30% d'ingrédient apportant l'arôme et 70 à 99% d'un support choisi dans le groupe comprenant de la farine, de la semoule, des graines telles que des graines de sésame, des graines de pavot, des céréales telles que des flocons d'avoine, et leurs mélanges,
ledit ingrédient apportant l'arôme étant du malt, un extrait de malt, un dérivé de levure, un levain sec ou liquide ou tout mélange de ces ingrédients.

2. Procédé selon la revendication 1, **caractérisé en ce que** l'ingrédient apportant l'arôme est placé dans un milieu liquide ou dans la dorure, de préférence de l'eau, ou est mélangé à un support tel que défini à la revendication 1.

3. Procédé selon la revendication 1 ou 2, **caractérisé en ce que** la composition aromatisante est liquide et est appliquée par pulvérisation.

4. Procédé selon la revendication 3, **caractérisé en ce que** la composition liquide est appliquée par pulvérisation à raison de 4 à 40 mg, de préférence de 10 à 22 mg de composition liquide par cm² de surface.

5. Procédé selon la revendication 1 ou 2, **caractérisé en ce que** la composition est pulvérulente et est appliquée par fleurage.

6. Procédé selon la revendication 5, **caractérisé en ce que** la composition pulvérulente est appliquée par fleurage à raison de 4 à 100 mg, de préférence de 17 à 48 mg par cm² de surface.

7. Procédé selon l'une quelconque des revendications 1 à 6, **caractérisé par le fait qu'**il comprend les étapes successives suivantes :
1. Pétrissage
2. Division
3. Façonnage
4. Fermentation
5. Cuisson,
la composition aromatisante étant appliquée juste avant l'étape 5 de cuisson.

8. Procédé selon l'une quelconque des revendications 1 à 6, **caractérisé par le fait qu'**il comprend les étapes successives suivantes :
1'. Pétrissage
2'. Division
3'. Façonnage
4'. Fermentation
5'. Pré-cuisson
6'. Cuisson,
la composition aromatisante étant appliquée ou bien juste avant l'étape 5' de pré-cuisson ou bien juste avant l'étape 6' de cuisson.

## Patentansprüche

1. Verfahren zur geschmacklichen Individualisierung von Brot oder Gebäck, wobei auf die Oberfläche des geformten Teiglings oder auf die Kruste des Brotes oder Gebäcks vor dem abschließenden Backen aufgebracht wird:
- eine flüssige Aromatisierungszusammensetzung, in der die Konzentration des aromatisierenden Bestandteils, 5 bis 50 Gew.-% der flüssigen Zusammensetzung beträgt, oder
- eine pulverförmige Aromatisierungszusammensetzung, die 1 bis 30 % eines aromatisierenden Bestandteils und 70 bis 99 % eines Trägers umfasst, ausgewählt aus der Gruppe umfassend Mehl, Grieß, Körner wie Sesamsamen, Mohnsamen, Cerealien wie Haferflocken und Mischungen davon,
wobei der aromatisierende Bestandteil Malz, Malzextrakt, Hefederivat, trockener oder flüssiger Sauerteig oder eine Mischung dieser Bestandteile ist.

2. Verfahren nach Anspruch 1, **dadurch gekennzeichnet, dass** der aromatisierende Bestandteil in ein flüssiges Medium oder in den Überzug, vorzugsweise Wasser, eingebracht wird oder mit einem Träger nach Anspruch 1 vermischt wird.

3. Verfahren nach Anspruch 1 oder 2, **dadurch gekennzeichnet, dass** die Aromatisierungszusammensetzung flüssig ist und durch Sprühen aufgebracht wird.

4. Verfahren nach Anspruch 3, **dadurch gekennzeichnet, dass** die flüssige Zusammensetzung durch Sprühen in einer Menge von 4 bis 40 mg, vorzugsweise 10 bis 22 mg flüssiger Zusammensetzung pro cm² Oberfläche aufgebracht wird.

5. Verfahren nach Anspruch 1 oder 2, **dadurch gekennzeichnet, dass** die Zusammensetzung pulverförmig ist und durch vorsichtiges Auftragen aufgebracht wird.

6. Verfahren nach Anspruch 5, **dadurch gekennzeichnet, dass** die pulverförmige Zusammensetzung durch vorsichtiges Auftragen in einer Menge von 4 bis 100 mg, vorzugsweise 17 bis 48 mg pro cm² Oberfläche aufgebracht wird.

7. Verfahren nach einem der Ansprüche 1 bis 6, **dadurch gekennzeichnet, dass** es die folgenden aufeinanderfolgenden Schritte umfasst:
1. Kneten
2. Teilen
3. Formen
4. Gären
5. Backen,
wobei die Aromatisierungszusammensetzung kurz vor Schritt 5 des Backens aufgebracht wird.

8. Verfahren nach einem der Ansprüche 1 bis 6, **dadurch gekennzeichnet, dass** es die folgenden aufeinanderfolgenden Schritte umfasst:
1'. Kneten
2'. Teilen
3'. Formen
4'. Gären
5'. Vorbacken
6'. Backen,
wobei die Aromatisierungszusammensetzung entweder kurz vor Schritt 5' des Vorbackens oder kurz vor Schritt 6' des Backens aufgebracht wird.

## Claims

1. A process for customizing the taste of bread or pastry, in which the following are applied to the surface of the shaped dough ball or to the crust of the bread or pastry, before final baking:
- a liquid flavoring composition in which the concentration of flavoring ingredient is from 5% to 50% by weight of the liquid composition, or
- a pulverulent flavoring composition comprising 1% to 30% of flavoring ingredient and 70% to 99% of a support chosen from the group comprising flour, semolina, seeds such as sesame seeds, poppy seeds, cereals such as oat flakes, and mixtures thereof,
said flavoring ingredient being malt, a malt extract, a yeast derivative, a dry or liquid leaven or any mixture of these ingredients.

2. The process as claimed in claim 1, **characterized in that** the flavoring ingredient is placed in a liquid medium or in the browning, preferably water, or is mixed with a support as defined in claim 1.

3. The process as claimed in claim 1 or 2, **characterized in that** the flavoring composition is liquid and is applied by spraying.

4. The process as claimed in claim 3, **characterized in that** the liquid composition is applied by spraying at a rate of from 4 to 40 mg, preferably from 10 to 22 mg of liquid composition per cm² of surface.

5. The process as claimed in claim 1 or 2, **characterized in that** the composition is pulverulent and is applied by dusting.

6. The process as claimed in claim 5, **characterized in that** the pulverulent composition is applied by dusting at a rate of from 4 to 100 mg, preferably from 17 to 48 mg per cm² of surface.

7. The process as claimed in any one of claims 1 to 6, **characterized in that** it comprises the following successive steps:
1. Kneading
2. Division
3. Shaping
4. Fermentation
5. Baking,
the flavoring composition being applied just before the baking step 5.

8. The process as claimed in any one of claims 1 to 6, **characterized in that** it comprises the following successive steps:
1'. Kneading
2'. Division
3'. Shaping
4'. Fermentation
5'. Prebaking
6'. Baking,
the flavoring composition being applied either just before the prebaking step 5' or just before the baking step 6'.
